(19) Europäisches Patentamt
European Patent Office
Office européen des brevets

(11) Veröffentlichungsnummer: **0 000 757**
**B1**

(12) # EUROPÄISCHE PATENTSCHRIFT

(45) Veröffentlichungstag der Patentschrift: **05.08.81**

(51) Int. Cl.³: **C 07 F 9/145** //C08K5/52

(21) Anmeldenummer: **78100550.9**

(22) Anmeldetag: **31.07.78**

(54) **Verfahren zur Herstellung von Triarylphosphiten.**

(30) Priorität: **08.08.77 CH 9691/77**

(43) Veröffentlichungstag der Anmeldung:
**21.02.79 Patentblatt 79/4**

(45) Bekanntmachung des Hinweises auf die Patenterteilung:
**05.08.81 Patentblatt 81/31**

(84) Benannte Vertragsstaaten:
**BE CH DE FR GB NL SE**

(56) Entgegenhaltungen:
**US - 3 463 838**
**US - 3 533 989**

**KOSOLAPOFF ORGANIC PHOSPHORUS COMPOUNDS Band 5 (1973) Wiley-Interscience**
**Seiten 32, 33**

(73) Patentinhaber: **CIBA-GEIGY AG**
**Patentabteilung Postfach**
**CH-4002 Basel (CH)**

(72) Erfinder: **Maul, Rudolf, Dr.**
**Chrodegangstrasse 6a**
**D-6143 Lorsch/Hessen (DE)**
Erfinder: **Eberhard, Otto, Dr.**
**Buchwaldstrasse 32**
**D-6145 Lindenfels (DE)**
Erfinder: **Zinke, Horst, Dr.**
**Berlinerweg 12**
**D-6101 Ernsthofen (DE)**

EP 0 000 757 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von Triarylphosphiten

Die vorliegende Erfindung betrifft ein Verfahren zur Herstellung von Triarylphosphiten aus Phosphortrihalogeniden und Hydroxyaromaten unter Verwendung bestimmter Phosphor, Stickstoff und/oder Schwefel enthaltender Verbindungen als Katalysatoren.

Es ist bekannt, dass Triarylphosphite als Stabilisatoren bzw. Kostabilisatoren eine breite Anwendung bei der Verarbeitung von insbesondere thermoplastischen Kunststoffen gefunden haben. Die Arylgruppen können hierbei substituiert oder unsubstituiert sein. Ihre Herstellung erfolgt im allgemeinen durch die Umsetzung von Phosphortrihalogeniden mit Hydroxyaromaten. Bei dieser Reaktion müssen hohe Temperaturen angewendet werden, um einen möglichst vollständigen Umsatz zu erzeilen, insbesondere dann, wenn die Arylgruppen substituiert sind und die Reaktivität der Hydroxylgruppen behindert wird. Oft reichen jedoch die hohen Temperaturen und relativ langen Reaktionszeiten nicht aus, um eine vollständige Umsetzung zu erzielen, sondern man erhält ein Gemisch, das im wesentlichen aus Mono- und Diaryloxyphosphorhalogeniden sowie Triarylphosphiten besteht.

Es wurde daher schon vorgeschlagen, diese Reaktion in Gegenwart von Katalysatoren durchzuführen. Als mögliche Katalysatoren sind Alkali- und Erdalkalihalogenide wie z.B. LiCl, $MgCl_2$ oder $CaCl_2$, Metalle wie z.B. Mg oder Zn, Lewissäuren wie z.B. $ZnCl_2$ oder $AlCl_3$ sowie als organische Verbindungen sitckstoffhaltige aromatische Heterocyclen wie Pyridin genannt, vgl. russisches Patent Nr. 488 821. Diese Lösungen sind noch nicht befriedigend und erfordern immer noch zu lange Erwärmungszeiten bei zu hohen Temperaturen.

Die in dem russischen Patent Nr. 488 821 als geeignete Katalysatoren vorgeschlagenen quartären Phosphoniumbasen zeichnen sich zwar durch eine erhöhte Reaktivität aus, sind aber nicht ausreichend spezifisch. Besonders bei Verwendung substituierter Hydroxylaryle werden nur Gemische aus überwiegend Diarylchlor- und Triarylphosphiten erhalten.

Aufgabe vorliegender Erfindung ist es, ein Verfahren zur Herstellung von Triarylphosphiten aus Phosphortrihalogeniden und Hydroxyaromaten bereitzustellen, das durch den Einsatz reaktiver und selektiver wirkender Katalysatoren hohe Ausbeuten bei niedrigeren Temperaturen und verkürzten Reaktionszeiten ermöglicht, besonders beim Einsatz substituierter Hydroxyaromaten.

Gegenstand vorliegender Erfindung ist ein Verfahren zur Herstellung von Triarylphosphiten gemäß Patentanspruch 1.

R in der Formel $(RO)_3P$ in seiner Bedeutung als Aryl ist beispielsweise Naphthyl und insbesondere Phenyl, die wie angegeben substituiert sein können. Die Substituenten können sich in beliebiger Position des Aryls befinden. Vorzugsweise sind nicht mehr als drei Substituenten vorhanden.

Im Falle der Phenylgruppen befinden sich die Substituenten vorzugsweise in den 2-, 4- und/oder 6-Stellungen. Besonders bevorzugt ist die 2,4-Stellung. Sofern sich Substituenten in den 2,6-Positionen befinden, soll es sich nicht um jene mit starker Raumerfüllung handeln, z.B. tertiär-Alkylgruppen. Gemäss dem erfindungsgemässen Verfahren werden auch hierbei Reaktionsgemische erhalten, in denen sich überwiegend unerwünschte Chlorphosphite finden. Es ist also beim erfindungsgemässen Verfahren ausgeschlossen, dass sich zwei Substituenten mit einem tertiären $\alpha$-C-Atom in den 2,6-Stellungen befinden; wenn sich also in 2-Stellung eine Gruppe mit einem tertiären $\alpha$-C-Atome gebunden ist, ist in 6-Stellung eine Gruppe mit einem sekundären, vorzugsweise primären C-Atom gebunden.

Das Aryl kann mit linearem oder verzweigtem Alkyl substituiert sein. Dieses enthält bevorzugt 1 bis 18, insbesondere 1 bis 12 C-Atome. Als Beispiele seien Methyl, Ethyl, n-Propyl, iso-Propyl, n-Butyl, i-Butyl, t-Butyl, Pentyl, Hexyl, Heptyl, n-Octyl, t-Octyl, n-Nonyl, i-Nonyl, Decyl, n-Dodecyl, Tetradecyl, Hexadecyl, Octadecyl und Eicosyl genannt. Das Alkyl kann auch durch Cycloalkyl substituiert oder unterbrochen sein, z.B. Cyclohexylmethyl oder Methylcyclohexyläthyl.

Das Aryl kann auch durch Cycloalkyl mit vorzugsweise 5 oder 6-Ringskohlenstoffatomen substituiert sein, das auch durch Alkyl substituiert sein kann. Beispiele sind: Cyclopentyl, Cyclohexyl, Methylcyclohexyl, Ethylcyclohexyl, Octylcyclohexyl, Cyclooctyl.

Das Aryl kann auch durch Aryl, vorzugsweise Phenyl und Aralkyl, vorzugsweise Benzyl, $\alpha$- oder $\beta$-Phenylethyl, substituiert sein. Die Arylgruppe kann hierbei durch Alkylgruppen mit vorzugsweise 1 bis 8 C-Atomen substituiert sein. Beispiele sind Methylphenyl, Ethylphenyl, Methylbenzyl.

Einige Beispiele für Hydroxyaromaten der Formel ROH sind Phenol, $\alpha$- oder $\beta$-Naphthol, Methylnaphthol, 2- oder 4-Methylphenol, 2-oder 4-Ethylphenol, 2- oder 4-Propyl- sowie Isopropylphenol, 2- oder 4-n-Butyl-, i-Butyl- sowie t-Butylphenol, Pentyl-, Hexyl-, Heptyl-, n-Octyl-, tert-Octyl-, Nonyl-, Decyl, Dodecyl-, Octadecylphenol, Cyclohexyl-, Phenyl- oder Benzylphenol, 2,4- oder 2,6-Dimethyl-, Diethyl-, Dipropyl-, Diisopropyl-, Di-n-butyl-, Di-i-Butylphenol, 2,4-Di-tert-Butyl-phenol, 2-Methyl-4-Aethylbenzol, 2-Methyl-4-tert-Butylphenol, 2-tert-Butyl-4-Methylphenol, 2-Methyl-4-n-Octylphenol, 2,4,6-Trimethylphenol, 2,4,6-Triisopropylphenol, 2,6-Dimethyl-4-Octylphenol, 2-Methyl-4-Benzylphenol.

Unter den Phosphorhalogeniden, die als Ausgangsverbindungen bei der Durchführung des

erfindungsgemässen Verfahrens verwendet werden, ist Phosphortrichlorid besonders bevorzugt. Vorzugsweise werden stöchiometrische Mengen der Reaktanden eingesetzt, um zusätzliche Reinigungsoperationen zu vermeiden. Mitunter kann es aber von Vorteil sein, wenn ein geringer Ueberschuß, z.B. bis 10%, des Hydroxyaryles eingesetzt wird. Der Katalysator wird vorzugsweise in Mengen von 0,05 bis 5 Mol-%, insbesondere 0,1 bis 2 Mol-% eingesetzt.

Das erfindungsgemässe Verfahren kann bei Temperaturen von 10°C bis vorzugsweise 150°C, besonders 20 bis 130°C durchgeführt werden. Höhere Temperaturen sind im allgemeinen nicht erforderlich, was als besonders vorteilhaft anzusehen ist.

Das erfindungsgemässe Verfahren kann ohne Lösungsmittel durchgeführt werden. Die Mitverwendung eines Lösungsmittels hat sich jedoch als vorteilhaft erwiesen. Geeignete Lösungsmittel sind z.B. Aether wie Diethyläther, Tetrahydrofuran und Dioxan, aliphatische und aromatische Kohlenwasserstoffe wie Hexan, Heptan, Petroläther, Cyclohexan, Methylcyclohexan, Benzol, Toluol und Xylol, chlorierte Kohlenwasserstoffe wie Methylenchlorid, Chloroform, Dichloräthan und Tetrachlorkohlenstoff.

Erfindungsgemäss wird das Verfahren in Gegenwart ausgewählter Katalysatoren durchgeführt. Die N-Atome der Amine und Ammoniumsalze, der Amide und der stickstoffhaltigen Heterocyclen, der Guanidine, Amidine und Azomethine sowie deren Salze, die Sulfone, Sulfoxide, Sulfoniumverbindungen, Phosphine, Phosphinoxide und Phosphinsulfide können gegebenenfalls durch Sauerstoff- oder Schwefelatome unterbrochenes Alkyl, Cycloalkyl, Aryl, hier besonders Phenyl, Alkaryl, hier besonder alkyliertes Phenyl, Aralkyl, hier besonders Benzyl oder Alkaralkyl, hier besonders alkyliertes Benzyl enthalten, die vorzugsweise 1 bis 18, insbesondere 1 bis 12 C-Atome aufweisen. Das Alkyl enthält besonders 1 bis 6 C-Atome und bei Cycloalkyl handelt es sich besonders um Cyclopentyl und Cyclohexyl.

Bei den erfindungsgemäss als Salze zu verwendenden Katalysatoren handelt es sich bevorzugt um die Halogenide und besonders um die Chloride. Die Salze können auch in situ durch den beim Verfahren entstehenden Halogenwasserstoff gebildet werden. Gleichwohl ist es in einigen Fällen vorteilhaft, die Salze selbst als Katalysatoren einzusetzen.

Eine Katalysatorgruppe sind die Amine und Ammoniumsalze. Es kann sich hierbei um primäre, sekundäre und tertiäre Amine sowie deren Salze handeln. Zu den Salzen zählen auch die quartären Ammoniumsalze. Bevorzugt sind die sekundären Amine, deren Salze und die quartären Ammoniumsalze. Ebenfalls bevorzugt sind die Alkyl- und Cycloalkylsubstituierten Amine, wie die cyclischen Amine, die den nichtaromatischen Heterocyclen zugerechnet werden.

Beispiele sind: Methyl-, Ethyl-, Propyl-, n-Butyl-, t-Butyl-, Pentyl-, Octyl-, Dodecyl-, Phenyl-, Benzyl-, Dimethyl-, Diäthyl-, Methylethyl, Methylbutyl, Methyloctyl, Methylphenyl-, Ethylbenzyl-, Trimethyl-, Triethyl-, Tributyl-, Octyldimethyl-, Dimethylphenylamin sowie Tetramethyl-, Trimethylethyl-, Triethylmethyl-, Tributylmethyl-, Tetrabutyl-, Trimethyloctyl-, Triphenylmethyl- und Tribenzylmethylammoniumchlorid, -bromid oder -jodid. Beizpiele für weitere Ammoniumsalze sind Methyl-, Octyl-, Dimethyl-, Methylcyclohexyl-, Dibenzyl-, Diphenyl-, Trimethyl-, Tributyl-, Tribenzyl- und Triphenylammoniumchlorid, -bromid und -jodid. Die Amine und Ammoniumsalze können auch aromatische N-heterocyclische Reste enthalten, z.B. Pyridyl. Diese Amine sind wirksamer als die reinen aromatischen N-Heterocyclen.

Eine weitere Gruppe an Katalysatoren sind die Amide der Carbon- und Thiocarbonsäuren sowie der Sauerstoffsäuren des Phosphors. Zu dieser Gruppe zählen auch die Harnstoffe, Thioharnstoffe und ihre Bisharnstoffderivate. Die Amide können sich von mehrfunktionellen, vorzugsweise monofunktionellen Carbonsäuren oder Thiocarbonsäuren ableiten, die insbesondere 1 bis 14 C-Atome enthalten. Die Säuren können auch von aromatischen N-Heterocyclen abgeleitet sein. Es wurde gefunden, dass diese Amide wesentlich wirksamer sind als die zu Grunde liegenden aromatischen N-Heterocyclen. Ferner sind auch cyclische Amide wie z.B. ε-Caprolacetam geeignet. Die von Carbonsäuren und Thiocarbonsäuren abgeleiteten Amide entsprechen bevorzugt der Formel

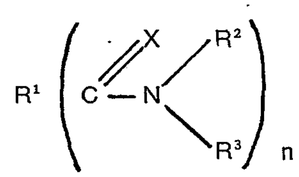

worin für n = 1 $R^1$ Phenyl, Benzyl, Naphtyl, Cyclohexyl, Cyclopentyl, Pyridyl, Wasserstoff oder Alkyl mit 1 bis 13, vorzugsweise 1 bis 6 C-Atomen ist, für n = 2 $R^1$ Phenylen, Naphthylen, Cyclohexylen oder Alkylen mit 1 bis 12, vorzugsweise 1 bis 6 C-Atomen oder eine direkte Bindung ist, X für ein Sauerstoff- oder Schwefelatom stehen und $R^2$ und $R^3$ unabhängig voneinander für ein Wasserstoffatom, Phenyl, Benzyl, Cyclohexyl und Alkyl mit 1 bis 12, vorzugsweise 1 bis 6 C-Atomen stehen oder $R^2$ und $R^3$ zusammen gegebenenfalls durch O- oder S-Atome unterbrochenes Alkylen mit bevorzugt 4—7 C-Atomen bedeuten. Beispiele sind Formamid, Oxalsäurediamid, Dimethylformamid, Acetamid, Thioacetamid, N,N-Dimethylacetamid oder -thioacetamid, Picoanilid, Thiopicoanilid, Benzoesäureamid, Terephthalsäurediamid, Trimellitsäuretriamid.

Bei den Phosphorsauerstoffsäuren, von denen sich die Amide ableiten können, handelt es sich z.B. um Phosphorsäure, phosphorige Säure, hypophosphorige Säure, Phosphonsäure oder Phosphinsäure. Bevorzugt sind Phosphorsäure und Phosphonsäuren. Beispiele für solche Amide sind Phosphorsäuretriamid, Hexamethylphosphorsäuretriamid, Methylphosphonsäurediamid, Phenylphosphonsäure-N,N-tetramethyldiamid, N,N'-(Dimethyl)phenylphosphonsäurediamid.

Als Beispiele für die Amide der Kohlensäure bzw. Thionokohlensäure seien neben Harnstoff und Thioharnstoff genannt: Tetramethylharnstoff oder -thioharnstoff, Diphenyl-oder Dibenzylharnstoff oder -thioharnstoff, Diethylharnstoff, Di-n-octylharnstoff oder -thioharnstoff sowie Bisharnstoffderivate wie z.B. Ethylenbisharnstoff, N,N-Tetramethyl-phenylenthioharnstoff. Beispiele für cylclische Harnstoffe sind Hydantoin und Benzimidazolon.

Eine weitere Gruppe für das erfindungesgemässe Verfahren geeigneter Katalysatoren sind nichtaromatische N-Heterocyclen. Diese können mehr als ein N-Atom sowie auch O- und S-Atome enthalten. Sie können auch ungesättigt sein. Sie können in Form von Salzen vorliegen, auch in Form von quartären Ammoniumbasen und die N-Atome können substituiert sein, vorzugsweise mit Alkylgruppen von 1 bis 12 C-Atomen. Beispiele sind:

Pyrrolidin, $\Delta^3$-Pyrrolin, N-Methylpyrrolidin, Dihydroindol, Pyrazolidin, Imidazolidin, $\Delta^2$-Pyrazolin, 1-Phenylpyrazolidin, Oxazolidin, Thiazolidin, Oxazolin, Triazolidin, Oxadiazolidin, Thiadiazolidin, Piperridin, Morpholin, N-Methylmorpholin, Chinolidin, 1,2-Dihydropurin, 8-Aza-bicyclo-(3,2,1)-octan.

Unter den Guaniden sind neben dem Guanidin selbst N-alkylierte, benzylierte und phenylierte Derivate zu nennen, z.B. Tetramethyl- oder Tetrabutylguanidin, N,N'-Bisphenylguanidin. Als Salze kommen hauptsächlich die Halogenide in Frage.

Eine weitere Katalysatorengruppe sind die Azomethine und Amidine sowie deren Salze, bevorzugt die Halogenide. Sie können durch folgende Formeln dargestellt werden:

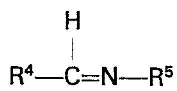 und 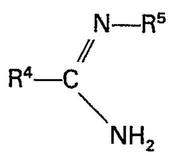

worin $R^4$ Phenyl, Benzyl, Cyclohexyl, ein Wasserstoffatom oder Alkyl mit 1 bis 8, vorzugsweise 1 bis 4 C-Atomen und $R^5$ ein Wasserstoffatom oder Phenyl, Benzyl, Cyclohexyl oder Alkyl mit 1 bis 18, vorzugsweise 1 bis 8 C-Atomen sind. Als Beispiele seien genannt:

Acetamidinhydrochlorid, N-Methylacetamidin, Benzylidenanilid, N-Butylpropionamidin.

Die als Katalysatoren verwendeten Sulfone und Sulfoxide können linear oder cyclisch sein und sie können weitere funktionelle Gruppen enthalten, z.B. Estergruppen. Beispiele sind: Dimethylsulfon, Dimethylsulfoxid, Tetra- oder Pentamethylensulphon, Tetramethylenxulfoxid, Bis-carboisooctyloxidimethylsulfoxid.

Von den Sulfoniumsalzen sind die Sulfoniumjodide bevorzugt, z.B. Trimethylsulfoniumjodid, Dimethyläthylsulfoniumjodid, Triäthylsulfoniumjodid. Auch die Salze, besonders die Jodide der Sulfoxide sind geeignet, z.B. Trimethylsulfoxoniumjodid.

Eine weitere Gruppe erfindungsgemäss zu verwendender Katalysatoren sind die primären, sekundären und tertiären Phosphine, deren Salze, Oxide und Sulfide. Bevorzugt sind die tertiären Phosphine, ihre Salze, Oxide und Sulfide und unter den Salzen die Hydrohalogenide, besonders die Chloride, Bromide und Jodide. Das Phosphoratom kann Phenyl, Benzyl, Cyclohexyl und Alkyl mit 1 bis 12, vorzugsweise 1 bis 6 C-Atome enthalten. Beispiele sind: Methylphosphin, Ethylphosphin, Hexylphosphin, Dodecylphosphin, Dimethyl-, Ethylmethyl-, Diphenyl-, Dicyclohexyl-, Dibenzyl-, Phenylmethylphosphin, Triphenyl-, Tribenzyl-, Tricyclohexyl-, Trimethyl-, Triethyl-, Tripropyl-, Tributyl-, Triisobutyl-, Tripentyl-, Trihexyl-, Dimethylphenylphosphin, ihre Hydrochloride, -bromide und -jodide sowie -oxide und -sulfide.

Die Alkoholreste der Ester von Phosphonsäuren und Phosphorsäure leiten sich bevorzugt von Phenolen und besonders $C_1$—$C_{18}$-Alkanolen sowie Cycloalkanolen ab, z.B. Phenol, 2-Methylphenol, Cyclohexanol, Methanol, Ethanol, Propanol, Butanol, Hexanol, Octanol, i-Octanol, Dodecanol, Octadecanol. Beispiele für Phosphonsäuren sind: Phenyl-, Benzyl-, Cyclohexyl-, Methyl-, Ethyl-, Propyl-, Butyl-, Pentyl- und Hexylphosphonsäure.

Das erfindungsgemässe Verfahren wird in hierfür bekannten Vorrichtungen durchgeführt. Im allgemeinen wird das Hydroxyaryl, gegebenenfalls zusammen mit einem Lösungsmittel vorgelegt, das Phosphortrihalogenid zugegeben und nach Zugabe des Katalysators das Reaktionsgemisch bis zur vollständigen Reaktion gerührt. Das Rühren erfolgt zur Beschleunigung der Reaktion bevorzugt unter Erwärmen.

Es ist jedoch auch möglich den Hydroxyaromaten, gegebenenfalls ein Lösungsmittel und den Katalysator vorzulegen und das Phosphortrihalogenid langsam zuzugeben. In einigen Fällen hat es sich als vorteilhaft erwiesen, hierzu das vorgelegte Gemisch leicht zu erwärmen, z.B. bis zu 60°C, vorzugsweise

bis zu 40°C. Nach Zugabe des gesamten Phosphorhalogenides wird zur Vervollständigung gegebenenfalls unter Erwärmen bis zu 150°C nachgerührt.

Der entstehende Halogenwasserstoff wird vorteilhaft während der Reaktion laufend entfernt, wobei zur vollständigen Abtrennung Vakuum verwendet werden kann. Die Isolierung des gewünschten Triarylphosphites erfolgt nach bekannten Methoden durch Destillation oder Kristallisation, gegebenenfalls nach Entfernen des Lösungsmittels.

Mit dem erfindungsgemässen Verfahren werden überraschend unter schonenden Bedingungen Triarylphosphite innerhalb relativ kurzer Reaktionszeiten in hoher Reinheit und hervorragenden Ausbeuten erhalten. Besonders vorteilhaft ist bei diesem Verfahren, dass dies auch für die Herstellung von substituierten Hydroxyaromaten als Reaktanden, gilt insbesondere jenen, in denen die Reaktivität der Hydroxylgruppe durch sterische Hinderung beeinträchtigt ist.

Die erfindungsgemäss hergestellten Triarylphosphite sind geeignet als Stabilisatoren oder Costabilisatoren zusammen mit z.B. phenolischen Antioxidantien für die Verarbeitung von thermoplastischen Polymeren, z.B. Polyolefinen.

Die nachfolgenden Beispiele erläutern die Erfindung naher.

Beispiele 1

In einem 250 ml-Dreihalsrundkolben mit Thermometer, Magnetrührer und angeschlossenem Gasableitungsrohr, werden 61,91 g (0,3 Mol) 2,4-Di-tert.-butylphenol in 135 ml Toluol vorgelegt, 13,73 g (0,1 Mol) Phosphortrichlorid zugesetzt und nach Zugabe von 0.003 Mol des jeweiligen Katalysators 7 h bei 22—26°C gerührt. Der freigesetzte Chlorwasserstoff wird über das Gasableitungsrohr und einen kleinen angeschlossenen Blasenzähler in eine Absorptionsvorlage geleitet und mit ca. 300 ml Wasser absorbiert.

Der Säuregehalt der Vorlage wird danach durch Titration mit 0,1N-Natronlauge ermittelt.

Die in der nachstehenden Tabelle 1 zusammengefassten Versuchergebnisse zeigen die überraschend hohe Wirksamkeit der Katalysatorsysteme.

TABELLE 1

| Versuch Nr. | Katalysator | Konz. *) (Mol–%) | Absorbierte HCl-Menge (g HCl /7 Stdn) |
|---|---|---|---|
| 0 | – | – | 0,0002 |
| 1 | Tribenzylamin | 1,0 | 0,21 |
| 2 | Di-isopropylamin | 1,0 | 2,74 |
| 3 | Di-cyclohexylamin | 1,0 | 2,88 |
| 4 | Morpholin | 1,0 | 2.38 |
| 5 | Benzylamin | 1,0 | 0,27 |
| 6 | Dimethylformamid | 1,0 | 1,38 |
| 7 | N,N-Dimethylacetamid | 1,0 | 1,32 |
| 8 | Thioacetamid | 1,0 | 4,86 |
| 9 | Benzylidenanilin | 1,0 | 2,30 |
| 10 | Tetramethylammoniumchlorid | 1,0 | 3,40 |
| 11 | 1,5-Diazobicyclo[5,4,0]-undecen | 1,0 | 2,92 |
| 12 | Tetramethylguanidin | 1,0 | 2,78 |
| 13 | N-Formylmorpholin | 1,0 | 2,50 |
| 14 | 2-Methyl-$\Delta^2$-oxazolin | 1,0 | 3,43 |
| 15 | p-Dimethylaminopyridin | 1,0 | 2,78 |
| 16 | $\alpha$-Thiopicolinanilid | 1,0 | 2,56 |
| 17 | Methanphosphonsäuredimethylester | 1,0 | 0.63 |
| 18 | 2-Aminothiazol | 1,0 | 2,74 |
| 19 | Dimethylsulfoxid | 1,0 | 1,04 |
| 20 | Tri-isobutylphosphinoxid | 1,0 | 1,73 |
| 21 | Bis-carbon-isooctyloximethylsulfoxid | 1,0 | 1,68 |
| 22 | Tetramethylensulfoxid | 1,0 | 1,83 |
| 23 | Trimethylsulfoxoniumjodid | 1,0 | 0,11 |
| 24 | Tributylphosphin | 1,0 | 3,10 |
| 25 | Triphenylphosphin | 1,0 | 2,69 |

*) bezogen auf die eingesetzte Menge an 2,4-Di-tert.-butylphenol.

Beispiel 2

Die Umsetzung mit Phosphortrichlorid und 2,4-Di-tert.-butylphenol wird gemäss Beispiel 1 durchgeführt. An Stelle von Toluol wird Chloroform als Lösungsmittel verwendet.

Die Ergebnisse der Versuche sind in der nachstehenden Tabelle 2 zusammengefasst.

TABELLE 2

| Versuch Nr. | Katalysator | Konz. (Mol–%) | Absorbierte HCl-Menge (g HCl /7 Stdn) |
|---|---|---|---|
| 1 | – | | 0,00012 |
| 2 | Tetramethylthioharnstoff | 1,0 | 4,08 |
| 3 | Acetamidin-Hydrochlorid | 1,0 | 3,06 |
| 4 | Trimethylsulfoniumjodid | 1,08 | 4,47 |
| 5 | Thioacetamid | 1,0 | 5,45 |

Beispiele 3
(Vergleichsbeispiel)

Für Vergleichszwecke wird 2.4-Ditert.-Butylphenol mit Phosphortrichlorid gemäss Beispiel 1 umgesetzt, wobei als Katalysatoren verschiedene bekannte Produkte Verwendung finden. Die Ergebnisse sind in Tabelle 3 zusammengestellt.

TABELLE 3

| Versuch Nr. | Katalysator | Konz. (Mol–%) | Absorbierte HCl-Menge (g HCl /7 Stdn) |
|---|---|---|---|
| 1 | – | – | 0,0002 |
| 2 | Lithiumchlorid | 10 | 0,0128 |
| 3 | Calziumchlorid | 10 | 0,0648 |
| 4 | Aluminiumchlorid | 1 | 0,009 |
| 5 | Magnesium | 1 | 0,0137 |
| 6 | Magnesiumoxid | 1 | 0,005 |
| 7 | Zink | 1 | 0,0694 |
| 8 | Zinkchlorid | 10 | 0,046 |
| 9 | Pyridin | 1,0 | 0,6 |
| 10 | α-Picolin | 1,0 | 0,7 |

Die Ergebnisse der Vergleichsversuche zeigen, das durch die bislang bekannten Katalysatoren nur eine geringe Steigerung der Reaktionsgeschwindigkeit bei der Umsetzung von Phosphortrichlorid mit sterisch gehinderten Phenolen erzielt werden kann.

Beispiel 4

In einem 500 ml-Rundkolben werden 247,6 g 2.4-Di-tert.-butylphenol (1,2 Mol), 39 g Xylol und 0,8 g Dimethylformamid (0,011 Mol) vorgelegt und auf 40°C erwärmt. Innerhalb von 15 Minuten werden 54,9 g Phosphortrichlorid (0,4 Mol) zugetropft. Das Gemisch wird noch 1 Std. bei 40—50°C gerührt, auf 130°C erhitzt und 1 Std. bei 130°C gerührt. Anschliessend wird zur Entfernung des im Reaktionsgemisch noch enthaltenen Chlorwasserstoffs 1 Std. bei 120—130°C unter vermindertem Druck (ca. 267 m bar) gerührt, wobei auch ein Teil des Lösungsmittels mitentfernt wird.

Zur Isolierung des Produktes wird das Reaktionsgemisch mit Isopropanol verdünnt. Das auskristallisierte Tris(2.4-di-tert.-butylphenyl)-phosphit wird abfiltriert, mit Isopropanol gewaschen und getrocknet. Es werden 221 g Produkt (85,4% Ausbeute) mit einem Schmelzpunkt von 186—187°C erhalten. Das Phosphit ist sehr rein und enthält nur noch Spuren 2.4-Di-tert.-butylphenol.

**Patentansprüche**

1. Verfahren zur Herstellung von Triarylphosphiten der Formel $(RO)_3P$, worin R Aryl oder durch eine oder mehrere lineare oder verzweigte Alkyl-, Cycloalkyl-, Aryl- oder Aralkylgruppen substituiertes Aryl darstellt, wobei sich 2 Substituenten mit einem tertiären $\alpha$-C-Atom nicht in den beiden der Aetherbindung benachbarten Stellungen befinden dürfen, durch Umsetzung von Phosphortrihalogeniden mit Hydroxyaromaten der Formel ROH in Gegenwart von 0,005 bis 10 Mol.-%, bezogen auf das Hydroxyaryl, eines Katalysators, gegebenenfalls in Gegenwart eines Lösungsmittels, dadurch gekennzeichnet, dass man als Katalysator eine Verbindung aus den Gruppen

Amine oder Ammoniumsalze,
Amide der Carbon- und Thiocarbonsäuren sowie Sauerstoffsäuren des Phosphors,
nichtaromatische N-haltige Heterocyclen und deren Salze
Guanidine, Amidine und Azomethine sowie deren Salze,
Sulfone, Sulfoxide und Sulfoniumsalze,
primäre, sekundäre und tertiäre Phosphine und deren Salze,
Phosphinoxide, Phosphinsulfide oder Ester der Phosphorsäure und der Phosphonsäuren einsetzt.

2. Verfahren gemäss Anspruch 1, dadurch gekennzeichnet, dass es sich bei den Salzen der N-haltigen Heterocyclen, Amine, Guanidine, Amidine, Azomethine oder Phosphine bzw. den Ammonium- oder Sulfoniumsalzen um Halogenide, besonders Chloride handelt.

3. Verfahren gemäss Anspruch 1, dadurch gekennzeichnet, dass die Amine und Ammoniumsalze, die N-Atome der Amide und der N-haltigen Heterocyclen, der Guanidine, Amidine und Azomethine, die Sulfone, Sulfoxide, Sulfoniumverbingunden, Phosphine, Phosphinoxide, Phosphinsulfide gegebenenfalls durch Sauerstoff- oder Schwefelatome unterbrochene Alkyl-, Cycloalkyl-, Aryl-, Alkaryl-, Aralkyl- oder Alkaralkylgruppen als Substituenten enthalten, die vorzugsweise 1 bis 18, besonders 1 bis 12 C-Atome aufweisen, wie vorzugsweise Dimethylsulfoxid oder Triphenylphosphin.

4. Verfahren gemäss Anspruch 1, dadurch gekennzeichnet, dass der Katalysator ein sekundäres Amin, vorzugsweise Diisopropylamin, oder eind Ammoniumsalz ist, vorzugsweise ein Salz eines sekundären Amines oder ein quaternäres Ammoniumsalz, vorzugsweise Tetramethylammoniumchlorid.

5. Verfahren gemäss Anspruch 1, dadurch gekennzeichnet, dass sich die Amide von monofunktionellen Carbonsäuren oder Thiocarbonsäuren ableiten, die 1 bis 14 C-Atome enthalten, vorzugsweise Dimethylformamid, Thioacetamid, $\alpha$-Thiopicoanilid, Acetamidinhydrochlorid, Tetramethylthioharnstoff oder Tetramethylguanidin.

6. Verfahren gemäss Anspruch 1, dadurch gekennzeichnet, dass die Ester der Phosphorsäure oder Phosphonsäuren Reste von Phenolen, Alkanolen oder Cycloalkanolen enthalten, wie vorzugsweise Methanphosphonsäuredimethylester.

7. Verfahren gemäss Anspruch 1, dadurch gekennzeichnet, dass die nichtaromatischen N-haltigen Heterocyclen zusätzlich ein Sauerstoff- oder Schwefelatom im Ring enthalten und 5 bis 7-gliedrige Ringe darstellen, wie vorzugsweise Morpholin oder 2-Methyl-$\Delta^2$-oxazolin.

8. Verfahren gemäss Anspruch 1, dadurch gekennzeichnet, dass es sich bei den Sulfoniumsalzen um die Jodide handelt, vorzugsweise Trimethylsulfoniumjodid.

**Revendications**

1. Procédé de préparation de phosphites de triaryles répondant à la formule $(RO)_3P$ dans laquelle R désigne un radical aryle ou un radical aryle porteur d'un ou plusieurs substituants pris dans l'ensemble constitué par les alkyles linéaires ou ramifiés, les cycloalkyles, les aryles et les aralkyles, avec la condition qu'il ne doit pas y avoir deux substituants à atome de carbone tertiaire en $\alpha$ aux deux positions voisines de la liaison éther, par réaction de trihalogénures de phosphore avec des composés aromatiques hydroxyliques de formule ROH, en présence de 0,005 à 10% en moles, par rapport au composé hydroxy-arylique, d'un catalyseur, éventuellement en présence d'un solvant, procédé caractérisé en ce qu'on utilise, comme catalyseur, un composé pris dans les groupes suivants:

— les amines et les sels d'ammoniums,

— les amides des acides carboxyliques et thiocarboxyliques ainsi que de acides oxygénés du phosphore,

— les hétérocycles azotés non aromatiques et leurs sels,

— les guanidines, amidines et azométhines ainsi que leurs sels,

— les sulfones, les sulfoxydes et les sels de sulfoniums,

— les phosphines primaires, secondaires et tertiaires ainsi que leurs sels, leurs oxydes et leurs sulfures, et

— les esters de l'acide phosphorique et des acides phosphoniques.

2. Procédé selon la revendication 1, caractérisé en ce que les sels des hétérocycles azotés, des amines, des guanidines, des amidines, des azométhines ou des phosphines ainsi que les sels d'ammoniums ou de sulfoniums sont des halogénures, plus particulièrement des chlorures.

3. Procédé selon la revendication 1, caractérisé en ce que les amines et les sels d'ammoniums, les atomes d'azote des amides et des hétérocycles azotés, des guanidines, des amidines et des azométhines, les sulfones, les sulfoxydes, les composés de sulfoniums, les phosphines, les oxydes de phosphines et les sulfures de phosphines portent comme substituant des radicaux alkyles, cyclo-alkyles, aryles, alkylaryles, aralkyles ou alkyl-aralkyles, éventuellement interrompus par des atomes d'oxygène ou de soufre, radicaux qui ont de préférence de 1 à 18 atomes de carbone, en particulier de 1 à 12, comme dans le cas, très apprécié du diméthylsulfoxyde ou de la triphénylphosphine.

4. Procédé selon la revendication 1, caractérisé en ce que le catalyseur est une amine secondaire, de préférence la di-isopropylamine, ou un sel d'ammonium, de préférence un sel d'une amine secondaire ou un sel d'ammonium quaternaire, surtout le chlorure de tétraméthylammonium.

5. Procédé selon la revendication 1, caractérisé en ce que les amides dérivent d'acides carboxyliques ou thiocarboxyliques monofonctionnels qui contiennent de 1 à 14 atomes de carbone, et sont de préférence le diméthylformamide, le thio-acétamide, l'anilide de l'acide $\alpha$-thiopicolique, le chlorhydrate d'acétamidine, la tétraméthyl-thio-urée ou la tétraméthyl-guanidine.

6. Procédé selon la revendication 1, caractérisé en ce que les esters de l'acide phosphorique ou des acides phosphoniques contiennent des radicaux de phénols, d'alcanols ou de cyclo-alcanols, comme c'est le cas pour le méthane-phosphonate de diméthyle, corps très apprécié.

7. Procédé selon la revendication 1, caractérisé en ce que les hétérocycles azotés non aromatiques contiennent en outre, dans le noyau, un atome d'oxygène ou de soufre et ont des cycles comportant de 5 à 7 maillons, comme c'est le cas pour la morpholine ou pour la méthyl-2 $\Delta^2$-oxazoline, corps très apprécié.

8. Procédé selon la revendication 1, caractérisé en ce qu'on utilise, comme sels de sulfoniums, les iodures, de préférence l'iodure de triméthylsulfonium.

**Claims**

1. A process for producing triarylphosphites of the formula $(RO_3)P$, in which R represents aryl or aryl substituted by one or more straight-chain or branched-chain alkyl, cycloalkyl, aryl or aralkyl groups, wherein 2 substituents each having a tertiary $\alpha$-C atom are not in the two positions adjacent to the ether bond, by reaction of phosphorus trihalides with hydroxy-substituted aromatic compounds of the formula ROH in the presence of 0.005 to 10 mol %, relative to the hydroxy-substituted aryl compound, of a catalyst, optionally in the presence of a solvent, in which process the catalyst used is a compound from the group comprising amines or ammonium salts, amides of carboxylic and thiocarboxylic acids and also of oxygen acids of phosphorus, non-aromatic nitrogen-containing heterocycles and salts thereof, guanidines, amidines and azomethines as well as salts thereof, sulfones, sulfoxides and sulfonium salts, primary, secondary and tertiary phosphines and salts thereof, phosphine oxides, phosphine sulfides or esters of phosphoric acid and of phosphonic acids.

2. A process according to Claim 1, wherein the salts of the nitrogen-containing heterocycles, of the amines, guanidines, amidines, azomethines or phosphines, or the ammonium or sulfonium salts, are halides, particularly chlorides.

3. A process according to Claim 1, wherein the amines and ammonium salts, the N atoms of the amides and of the nitrogen-containing heterocycles, of the guanidines, amidines and azomethines, and the sulfones, sulfoxides, sulfonium compounds, phosphines, phosphine oxides or phosphine sulfides contain as substituents alkyl, cycloalkyl, aryl, alkaryl, aralkyl or alkaralkyl groups, which are optionally interrupted by oxygen or sulfur atoms, and which preferably contain 1 to 18 C atoms, particularly 1 to 12 C atoms, such as preferably dimethylsulfoxide or triphenylphosphine.

4. A process according to Claim 1, wherein the catalyst is a secondary amine, preferably diisopropylamine, or an ammonium salt, preferably a salt of the secondary amine, or a quaternary ammonium salt, preferably tetramethylammonium chloride.

5. A process according to Claim 1, wherein the amides are derived from monofunctional carboxylic acids or thiocarboxylic acids containing 1 to 14 C atoms, preferably dimethylformamide, thioacetamide, $\alpha$-thiopicoanilide, acetamidine hydrochloride, tetramethylthiourea or tetramethylguanidine.

6. A process according to Claim 1, wherein the esters of phosphoric acid or of phosphonic acids contain radicals of phenols, alkanols or cycloalkanols, such as preferably methanephosphonic acid dimethyl ester.

7. A process according to Claim 1, wherein the non-aromatic, nitrogen-containing heterocycles additionally contain an oxygen or sulfur atom in the ring and are 5- to 7-membered rings, such as preferably morpholine or 2-methyl-$\Delta^2$-oxazoline.

8. A process according to Claim 1, wherein the sulfonium salts are iodides, preferably trimethylsulfonium iodide.